# FASCICULE DE BREVET EUROPEEN

(11) **EP 0 762 182 B1**
(45) Date de publication et mention de la délivrance du brevet: **13.10.2010**
(21) Numéro de dépôt: 96401748.7
(22) Date de dépôt: 07.08.1996
(51) Int. Cl.: G02F 1/1335, F21V 8/00

(54) **Système d'éclairage arrière pour modulateur électro-optique et dispositif d'affichage comportant un tel système d'éclairage**
Hintergrundbeleuchtungssystem für elektrooptischen Modulator und Anzeigevorrichtung mit einem solchen Beleuchtungssystem
Backlighting system for electro-optic modulator and display device using the same

(30) Priorité: 11.08.1995 FR 9509752
(43) Date de publication de la demande: 12.03.1997
(73) Titulaire: THOMSON multimedia, 92648 Boulogne Cédex (FR)
(72) Inventeur: Haas, Gunther, 92050 Paris la Defense Cedex (FR); Battarel, Denis, 92050 Paris la Defense Cedex (FR); Dupont, Antoine, 92050 Paris la Defense Cedex (FR); Marcellin-Dibon, Eric, 92050 Paris la Defense Cedex (FR); Mourey, Bruno, 92050 Paris la Defense Cedex (FR); Sarayeddine, Khaled, 92050 Paris la Defense Cedex (FR); Drazic, Valter, 92050 Paris la Defense Cedex (FR)
(74) Mandataire: Ruellan-Lemonnier, Brigitte

(56) Documents cités:
- EP-A- 0 556 606
- WO-A-94/24589
- US-A- 5 359 691
- US-A- 5 396 406
- US-A- 5 418 631
- IBM TECHNICAL DISCLOSURE BULLETIN, vol. 29, no. 11, Avril 1987, NEW YORK US, pages 4838-4839, XP002001571 "Backlighting for liquid crystal display"
- IBM TECHNICAL DISCLOSURE BULLETIN, vol. 33, no. 9, Février 1991, NEW YORK US, pages 261-262, XP002001572 "High efficiency back light for lcd"
- PATENT ABSTRACTS OF JAPAN vol. 16, no. 193 (P-1349) & JP 04 026821 A (HITACHI)

## Description

La présente invention concerne un système d'éclairage arrière pour modulateur électro-optique transmissif fonctionnant, en particulier, en vision directe.

Elle concerne aussi un dispositif d'affichage, plus particulièrement du type afficheur à cristaux liquides, utilisé dans le mode transmission et éclairé par l'arrière par un tel système d'éclairage.

Les afficheurs à cristaux liquides ont comme inconvénients que leurs caractéristiques electro-optiques dépendent fortement des conditions angulaires d'observation. Ainsi, pour des angles de vue très importants, on remarque une dégradation du contraste et une inversion de l'échelle des gris. Pour remédier à ces inconvénients, on a proposé d'utiliser une source de lumière collimatée, un moyen pour distribuer la lumière angulairement (notamment un réseau de micro-lentilles ou un diffuseur holographique), étant associé au modulateur du côté observation. Dans ce cas, la lumière vue par un observateur regardant l'afficheur sous un certain angle est modulée par l'afficheur à cristaux liquides à l'intérieur d'un angle solide indépendant de l'angle d'observation.

Plusieurs systèmes permettant d'obtenir une lumière collimatée sont connus de l'homme de l'art. Ainsi, dans l'article du SID94 Applications Digest intitulé : "Flat collimator a backlighting assembly utilizing microprisms for energy efficiency", un système de collimation comportant un tube fluorescent, un réflecteur sensiblement parabolique entourant le tube, une section de collimation prolongeant le réflecteur et un conduit lumineux muni sur sa surface inférieure d'une structure micro-prismatique est décrit. Dans ce cas, la lumière émise par le tube est envoyée par le réflecteur à l'intérieur de la section de collimation puis dans le conduit lumineux où, par réflexion spéculaire, sur la structure micro-prismatique, sensiblement toute la lumière injectée dans le conduit lumineux est envoyée en étant collimatée de manière appropriée en direction du modulateur prévu parallèlement à la surface supérieure du conduit lumineux.

Le document US5359691 décrit un système selon le preambule de la revendication 1 et le document US5396406 décrit un autre système d'éclairage arrière avec une rangée de lentilles cylindriques permettant d'obtenir une lumière collimatée.

On connaît également selon l'état de la technique un document de brevet WO94/24589 décrivant un système de rétroéclairage basé sur l'utilisation d'un tuyau de lumière (« light pipe » en anglais) filtrant les rayons d'illumination de trop forte incidence. Ce système présente donc l'inconvénient d'avoir une efficacité non optimale.

La présente invention a pour but de proposer divers perfectionnements au système d'éclairage arrière du type décrit ci-dessus.

La présente invention a pour objet un système d'éclairage arrière selon la revendication 1.

Selon un mode de réalisation alternatif, ledit second moyen de collimation peut être placé à la sortie du réflecteur afin de collimater les rayons lumineux dans le plan y-x. Après réflexion par la structure micro-prismatique, cette collimation se traduit donc par une collimation dans le plan y-z.

Le système décrit ci-dessus présente un certain nombre d'avantages. Il donne une lumière fortement collimatée dans deux plans perpendiculaires. Il est peu encombrant, économique et simple à réaliser.

La présente invention a aussi pour objet un dispositif d'affichage comportant un système d'éclairage du type ci-dessus, un modulateur électro-optique transmissif du type afficheur à cristaux liquides et un moyen pour distribuer la lumière angulairement, appelé ci-après écran de diffusion.

Selon une caractéristique supplémentaire, dans le dispositif ci-dessus, la distance entre l'écran de diffusion et l'afficheur est choisie pour obtenir un effet de filtrage spatial.

Selon une autre caractéristique, une couche de filtres colorés est positionnée entre l'afficheur et l'écran de diffusion. Cette couche de filtres colorés peut comporter une couche matricielle noire appelée "black matrix".

Selon encore une autre caractéristique de la présente invention, un des substrats transparents formant l'afficheur à cristaux liquides incorpore une rangée à une ou deux dimensions de micro-lentilles, chaque micro-lentille formant l'image de l'élément pixel associé de l'afficheur sur l'écran de diffusion.

Selon une autre caractéristique, un des substrats transparents formant l'afficheur à cristaux liquides incorpore une rangée à une ou deux dimensions de micro-lentilles, chaque micro-lentille collectant la lumière entrant dans l'élément pixel associé de l'afficheur.

D'autres caractéristiques et avantages de la présente invention apparaîtront à la lecture de la description faite ci-après de différents modes de réalisation de la présente invention, cette description étant faite avec référence aux dessins annexés dans lesquels:
- la figure 1 est une vue en perspective schématique d'un premier mode de réalisation de la présente invention,
- la figure 2 est une vue schématique d'un second mode de réalisation de la présente invention ;
- les figures 3a, 3b, 3c et 3d sont des vues en coupe dans le plan z-y de différents modes de réalisation des moyens de collimation ;
- la figure 4 est une vue en coupe schématique d'un dispositif d'affichage utilisant un système d'éclairage arrière donnant une lumière collimatée ;
- la figure 5 représente une courbe donnant l'intensité de la distribution lumineuse sur l'écran pour un angle de collimation donné ;
- la figure 6 est une courbe donnant la distance s fonction de la diffusion d'un pixel en fonction de l'ange de collimation α et ;
- la figure 7 représente le pourcentage d'énergie pénétrant dans les pixels adjacents en fonction de l'angle de collimation α pour différentes épaisseurs d'écrans à cristaux liquides ;
- la figure 8 représente la disposition du filtre coloré dans un afficheur à cristaux liquides utilisé dans la présente invention ;
- les figures 9a, 9b et 9c représentent différents dessins pour la "black matrix" conformément à la présente invention, et
- la figure 10 représente l'utilisation d'un polariseur supplémentaire.

Pour simplifier la description dans les figures les mêmes éléments portent les mêmes références.

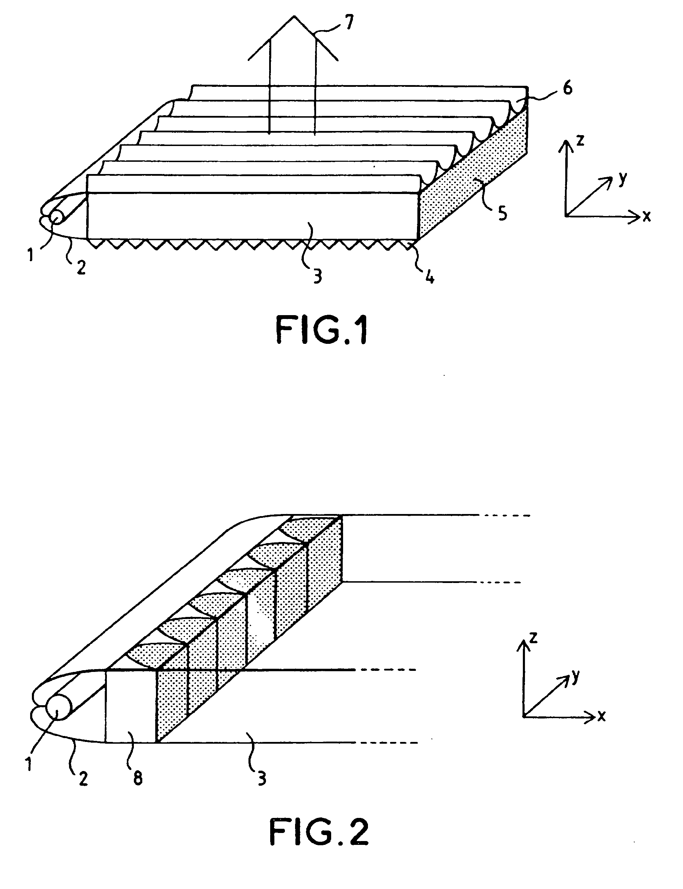

Tout d'abord on décrira avec référence aux figures 1, 2, 3d différents modes de réalisation d'un système d'éclairage arrière pour modulateur électro-optique transmissif fonctionnant en vision directe conforme à la présente invention.

Comme représenté sur la figure 1 le système d'éclairage comporte une source lumineuse 1 qui peut être ,par exemple, réalisée à l'aide d'un tube fluorescent. Cette source lumineuse est entourée sur toute la longueur du tube 1 par un moyen de réflexion 2 permettant de renvoyer les rayons lumineux émis par le tube selon une première direction appelée x. Le réflecteur 2 a de préférence la forme d'un concentrateur optique connu par exemple sous le terme CPC (du terme anglais: compound parabolic concentrator). Ce réflecteur 2 se prolonge par un moyen de transmission de la lumière 3 positionné en sortie du réflecteur de manière à transporter les rayons lumineux selon la direction x. Ce moyen de transmission de la lumière 3 est, de préférence, un guide d'ondes réalisé en un matériau transparent qui peut être par exemple du verre ou un matériau organique polymérique tel qu'un matériau acrylique. La hauteur du guide d'onde 3 est, de préférence, plus importante ou égale à la circonférence de la source lumineuse 1 de manière à obtenir une éfficacité maximale dans la transmission de la lumière. De manière connue, le guide d'onde 3 comporte sur sa partie inférieure une structure micro-prismatique 4 qui réfléchit spéculairement les rayons lumineux de manière à les envoyer dans la direction z. Cette structure micro-prismatique 4 est soit une partie du guide d'ondes 3 soit réalisée dans un matériau identique ou similaire et appairé en indice au guide d'ondes. Les rayons lumineux sont réfléchis par ladite structure micro-prismatique soit par réflection interne totale, soit par réflection sur une couche métallique, de préférence en aluminium, déposée sur la surface extérieure de ladite structure micro-prismatique. Pour éviter que la lumière ne sorte du guide d'onde dans la direction x à l'extrémité opposée à celle recevant la lumière, cette extrémité du guide d'ondes est revêtue avec un matériau réfléchissant 5, de préférence de l'aluminium. De ce fait les rayons lumineux se transportant à l'intérieur du guide d'ondes sont réfléchis spéculairement par la structure micro-prismatique 4 et renvoyés dans la direction z. Il est également possible, selon une autre réalisation de la présente invention, de placer une deuxième source lumineuse avec son réflecteur sur ladite extrémité du guide d'ondes au lieu de la couche 5 afin d'augmenter le flux lumineux du système.

Conformément à la présente invention, sur la partie du guide d'ondes 3 opposée à celle comportant la structure micro-prismatique est prévue un moyen de collimation 6 permettant de réaliser la collimation des rayons lumineux en sortie au moins dans un plan y-z, comme représenté sur la figure 1, de ce fait la lumière référencée 7 extraite du guide d'ondes par réflexion spéculaire est collimatée dans le plan z-y par l'intermédiaire de ce moyen de collimation spécial 6, cette lumière étant déjà collimatée dans le plan x-z.

Selon une autre réalisation, représentée sur la figure 2, la collimation dans le plan y-z est accomplie par un moyen de collimation positionné directement en sortie du réflecteur 2 juste avant l'entrée dans le guide d'ondes 3. Ce moyen de collimation 8 est du même type que les éléments 6 décrits en haut. Grâce à ce moyen de collimation 8, les rayons lumineux sont d'abord collimatés dans le plan y-x, puis après réflexion par la structure microprismatique cela se traduit par une collimation dans le plan y-z.

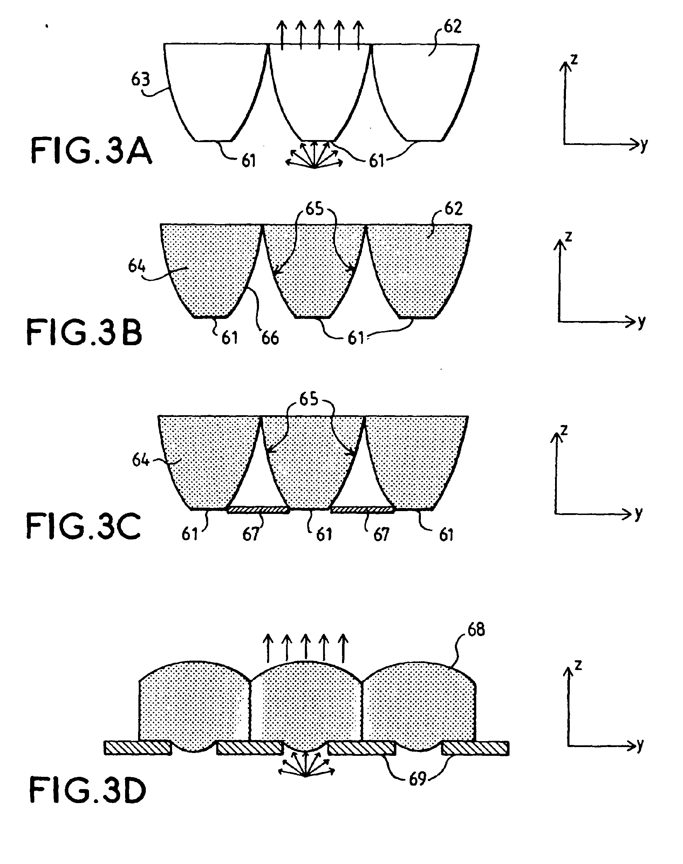

On décrira maintenant avec référence aux figures 3a, 3b, 3c et 3d, différents modes de réalisation des éléments de collimations 6 ou 8. Ces figures représentent des vues en coupe. Sur la figure 3a, les éléments de collimations 6 ou 8 sont constitués par des rangés de concentrateurs optiques ou, de manière plus générale, de réflecteurs présentant une forme creuse permettant d'obtenir la collimation de la lumière entrante. Ces éléments de collimation sont réalisés sur le principe consistant à collecter la lumière à partir d'une surface d'entrée du réflecteur plus petite avec une surface de sortie plus grande, comme représenté par les références 61 et 62. Dans le mode de réalisation de la figure 3a, les parois 63 du réflecteur sont réalisées en un matériau réfléchissant tel que de l'aluminium. Dans le mode de réalisation de la figure 3b, les moyens de collimations sont réalisés en un matériau transparent 64 tel que du verre ou un matériau organique polymérique tel que des matériaux acryliques, des polycarbonates ou des polyesters et la lumière à l'intérieur des moyens de collimation est réfléchie par réflexion interne totale comme représenté par la référence 65. Dans ce cas, afin d'assurer le recyclage de la lumière se trouvant à l'extérieur de la surface d'entrée 61, la surface extérieure des moyens de collimation est recouverte par une couche réfléchissante référencée 66 dans ce mode de réalisation. Dans le mode de réalisation de la figure 3c, la couche réfléchissante 66 est remplacée par des bandes réfléchissantes 67 prévues entre chaque rangée de moyens de collimation de manière à recouvrir l'espace vide entre les bandes d'entrées 61. Sur la figure 3d, on a représenté un mode de réalisation des moyens de collimation selon l'invention différents de ceux représentés aux figures 3a à 3c. Dans ce cas le moyen de collimation est constitué par une ou plusieurs rangées de lentilles cylindriques 68, les entrées des lentilles cylindriques étant séparées par des bandes réfléchissantes 69. Les rangées de lentilles cylindriques peuvent être des lentilles bi-convexes comme représenté sur la figure 3d, cela peut être aussi des lentilles simplement convexes.

Le système décrit ci-dessus permet de réaliser un système d'éclairage arrière pour un dispositif d'affichage dans lequel l'afficheur est un écran à cristaux liquides qui soit à la fois plat, facile à réaliser et d'un faible coût. Un tel système peut être utilisé notamment dans des dispositifs tels que les téléviseurs portables, les ordinateurs portables et le "videophone".

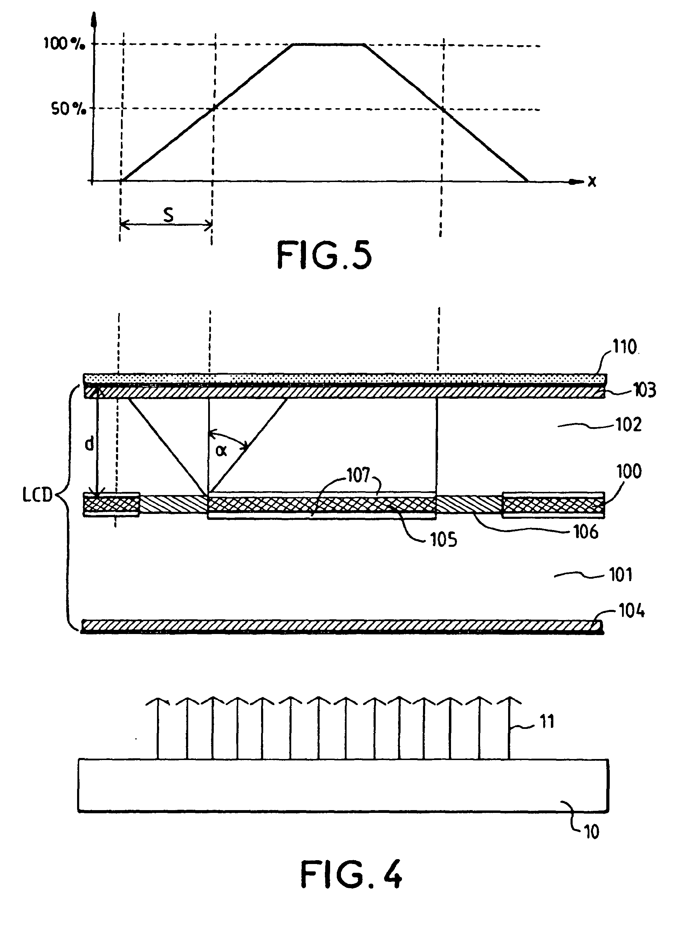

On décrira maintenant avec référence aux figures 4 à 9 différents modes de réalisation d'un dispositif d'affichage comportant un système d'éclairage arrière permettant d'obtenir une lumière collimatée. Ainsi comme représenté sur la figure 4, le système d'éclairage arrière référencé 10 qui est un système tel que celui représenté sur les figures 1 ou 2 permet d'obtenir une lumière fortement collimatée dont les rayons sont référencés 11. Comme représenté sur la figure 4, ce système est constitué essentiellement d'un afficheur à cristaux liquides, référencé LCD sur la figure 4, qui de manière connue est constitué d'une couche de cristal liquide de quelques micromètres d'épaisseur 100 enfermée entre deux substrats transparents 101 et 102 avec des polariseurs 103 et 104 fixés sur les parois. Chaque élément formant une image connu sous le terme pixel est constitué d'une surface active 105 entourée par une surface inactive qui est de manière typique recouverte par une matrice noire 106 connue sous le terme "black-matrix". Cette Black Matrix permet d'éviter toutes fuites lumineuses dans l'état noir du pixel. En général le cristal liquide est adressé par des électrodes de pixel transparentes 107 dans la surface active. Dans un mode de réalisation préférentiel, un moyen pour distribuer la lumière angulairement, notamment un diffuseur holographique 110 est fixé au polariseur 103 et l'ensemble est éclairé par le système d'éclairage 10 donnant une lumière collimatée. Dans ce cas et comme représenté sur la figure 5, si la source d'éclairage 10 présente une distribution lumineuse uniforme à l'intérieur d'un cône caractérisé par un angle de demi-ouverture α où α est mesuré à l'intérieur du substrat transparent 101, 102, dans ce cas l'image de la surface active 105 formée sur l'écran de diffusion 110 présente une distribution d'intensité telle que représentée sur la figure 5. Dans ce cas, la dispersion d'un pixel peut être caractérisée par la distance S définie sur la figure 5 et qui donne sur le diffuseur 110 la distance à partir du pixel original où l'intensité arrive à 0.

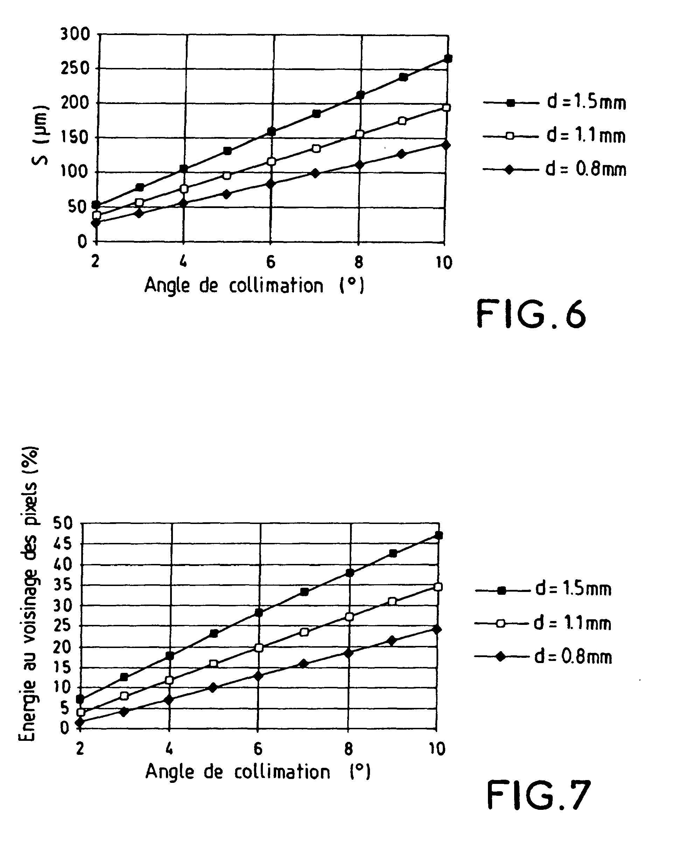

Pour mieux illustrer les avantages de la présente invention, on a représenté sur les figures 6 et 7 ladite distance S telle que définie ci-dessus en fonction de l'angle de collimation α pour différentes épaisseurs D correspondant à l'épaisseur du substrat transparent 102 plus l'épaisseur du polariseur 103. Ainsi que l'énergie au voisinage d'un pixel en fonction de l'angle de collimation α pour ces différentes épaisseurs 2. La valeur D = 1,5 mm correspond à l'épaisseur de verre la plus largement utilisée avec un polariseur normal d'épaisseur 0,4 mm. Cependant on peut réaliser des écrans à cristaux liquides avec des épaisseurs de verre de 0,7 mm, dans ce cas D = 1,1 mm correspond à une épaisseur de verre de 0,7 mm et un polariseur d'épaisseur 0,4 mm tandis que D = 0,8 mm correspond à un verre de 0,7 mm avec un polariseur particulier. On s'aperçoit dans ce cas que même si D = 1,5 mm un angle de collimation de 4° est tout à fait acceptable. Un tel angle de collimation peut être facilement obtenu avec une lampe halogène , une lampe au tungstène ou un tube fluorescent dans un dispositif d'éclairage arrière tel que décrit ci-dessus. D'autre part, selon une autre caractéristique de la présente invention et pour certaines applications, l'effet de diffusion peut être utilisé afin d'obtenir un filtrage spatial de l'afficheur. Afin de supprimer la structure en pixel de l'afficheur, la distance D aussi bien que l'angle de collimation α peuvent être ajustés de manière adéquate sans affecter la résolution de l'afficheur.

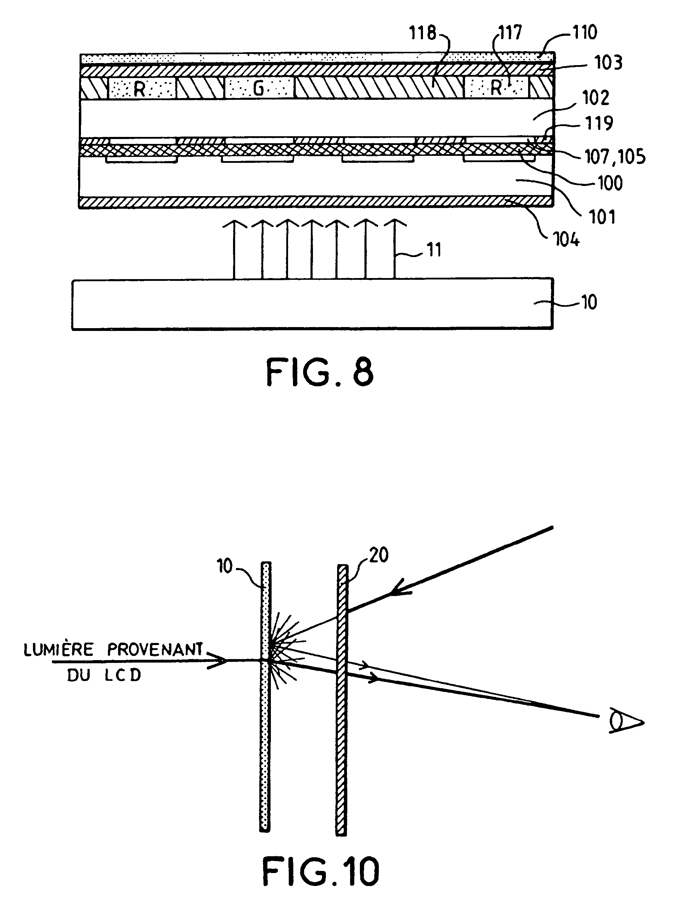

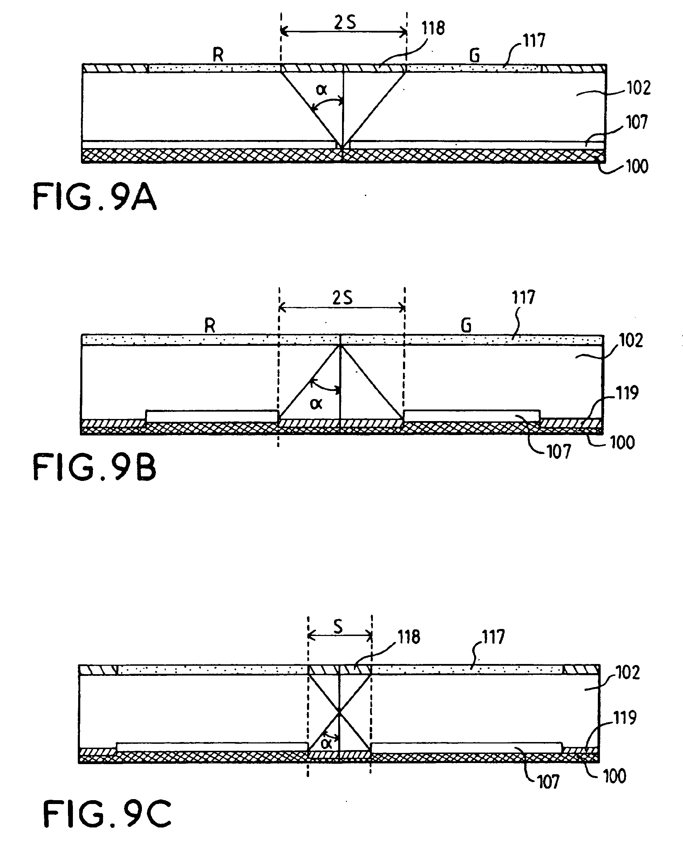

On décrira maintenant avec référence à la figure 8, un autre mode de réalisation d'un dispositif d'affichage utilisant un système d'éclairage conforme à la présente invention permettant d'utiliser une structure particulière pour les filtres colorés. Ainsi, comme représenté sur la figure 8 dans laquelle les éléments identiques à ceux de la figure 4 sont représentés avec les mêmes références, les filtres colorés qui dans un écran à cristaux liquides conventionnel sont placés à l'intérieur d'un des substrats transparents, ont été positionnés à l'extérieur comme représenté par la référence 117 sur la figure 8. L'utilisation de filtres colorés 117 à l'extérieur du substrat 102 permet d'utiliser des filtres colorés bon marché, par exemple de simples films photographiques qui ont été exposés à la structure pixel voulue. Dans le mode de réalisation préférentiel représenté à la figure 8, une couche de filtres colorés 117 incorporant une matrice noire 118 est placée à l'extérieur du substrat transparent 102 suivi par le polariseur 103 et l'écran de diffusion 110. En fonction de l'application et du matériau utilisé pour réaliser les filtres colorés le filtre coloré peut aussi être placé devant le polariseur 103. En général une matrice noire supplémentaire 119 sera utilisée sur le substrat transparent pour empêcher toute fuite lumineuse dans l'état noir. Pour éviter les phénomènes connus sous le terme "cross color" il doit y avoir au moins une matrice noire, sa largeur est déterminée par le fait que la lumière à partir d'un pixel coloré ne doit pas pénétrer à l'intérieur du pixel adjacent sur l'écran de diffusion. Trois dispositions sont possibles comme représentés sur les figures 9a à 9c dans lesquelles P représente le pas d'un pixel coloré individuel. Ainsi comme représenté sur la figure 9a, la matrice noire est réalisée seulement sur la couche de filtres colorés 117. La matrice noire présente une largeur de 2S et la transmission dans ce cas est donnée par la formule T = (P-2S)/p. Sur la figure 9b on a représenté une black matrix 119 réalisée à l'intérieur du substrat transparent. Sur la figure 9c, une black matrix 118 est réalisée sur la couche de filtres colorés 117 et une black matrix 119 est réalisée à l'extérieur du substrat transparent. Dans ce cas, la largeur de la black matrix est de S et la transmission T = (P-3/2S)/p. La solution représentée à la figure 9c est dans la plupart des cas la solution préférée parce qu'elle donne la transmission la plus élevée. Ainsi, le tableau ci après représentant la distance S et la transmission des matrices noires 118 et 119 en supposant un pas de pixel de 100 µm x 300 µm et pour deux épaisseurs différentes des substrats transparents a été représenté.

| α [°] | s[µm) | | transmission [%] | |
|---|---|---|---|---|
| | d = 1,1 mm | d = 0,7 mm | d = 1,1 mm | d = 0,7 mm |
| 1 | 19 | 12 | 71 | 82 |
| 2 | 38 | 24 | 42 | 63 |
| 3 | 58 | 37 | 14 | 45 |
| 4 | 77 | 49 | 0 | 27 |

La couche de filtres colorés comportant une matrice noire comme représenté sur la figure 8 par exemple, peut être obtenue de nombreuses manières. Ainsi on peut utiliser un procédé photographique dans lequel on éclaire un film photographique avec la structure de filtres couleurs souhaitée et un développement ultérieur. D'autre part on peut utiliser un procédé d'impression. La couche de filtres colorés peut être aussi obtenue en utilisant un filtre d'interférence dichroïque ou un procédé holographique ou une interférence biréfringente en utilisant un polymère à cristal liquide.

D'autres perfectionnements peuvent être aussi utilisés avec le dispositif d'affichage conforme à la présente invention. Ainsi l'écran de diffusion peut être un écran de diffusion présentant des caractéristiques non lambertienne dirigeant la lumière selon une gamme angulaire prédéterminée ce qui augmente la luminance dans cette gamme par comparaison à un diffuseur lambertien.

Il est aussi possible, de manière à optimiser le contraste du système, que la distribution angulaire de la lumière collimatée fournie par le système d'éclairage arrière soit choisie afin d'être en accord avec la caractéristique de contraste de l'écran à cristaux liquides. D'autre part la sortie lumineuse du système peut être améliorée si une rangée de micro-lentilles est incorporée dans le substrat transparent 102, chacune formant l'image du pixel associée sur l'écran 110. Dans ce cas, la matrice noire 118 est redondante. De la même manière, des rangées de micro-lentilles peuvent être incorporées dans ou sur le substrat transparent 101 afin de collecter toute la lumière incidente sur la surface active 105 du pixel associé. Lesdites rangées de micro-lentilles peuvent être des rangées à une dimension de lentilles cylindriques, le nombre de lentilles correspondant au nombre de pixels dans les directions horizontale et verticale. On peut aussi utiliser des rangées à deux dimensions de même dimension que la matrice formée par les pixels de l'écran à cristaux liquides.

Un perfectionnement important concerne le contraste du dispositif de visualisation selon l'invention sous lumière ambiante: Selon le choix du moyen de distribution 110 qui peut être réalisé de façon efficace par un dépoli ou un diffuseur holographique, le contraste sous lumière ambiante est souvent limité par la rétro diffusion de l'élément 110. Profitant du fait, que la lumière sortant du LCD est polarisée et que cette polarisation est en général maintenue par l'élément 110 (par exemple dans le cas d'un dépoli ou un diffuseur holographique), tandis que la polarisation de la lumière ambiante rétro-diffusée par le même élément 110 est en général détruite, le contraste en lumière ambiante peut être augmenté considérablement (jusqu'à un facteur 4) en mettant un polariseur 120 après le moyen diffuseur 110 comme le montre la figure 10. Son orientation est parallèle par rapport au polariseur de sortie du LCD. Dans certain cas où la polarisation de la lumière sortant du LCD est extrêmement bien maintenue en passant par l'élément 110, le polariseur 120 peut prendre la fonction du polariseur de sortie du LCD, ce qui permet d'enlever ce dernier afin d'améliorer la luminance du système de visualisation.

De nombreux perfectionnements peuvent être apportés au système ci-dessus sans sortir du cadre des revendications ci-jointes.

## Revendications

1. Système d'éclairage arrière pour modulateur électro-optique transmissif fonctionnant en vision directe comportant :
- un ou plusieurs moyens (1) de génération de la lumière pour générer des rayons lumineux,
- un ou plusieurs réflecteurs (2) pour renvoyer lesdits rayons lumineux générés selon une première direction appelée x,
- un moyen de transmission (3) de la lumière positionné en sortie du réflecteur de manière à transporter les rayons lumineux selon la direction x, une des faces du moyen de transmission parallèle à la direction de transport des rayons lumineux comportant une structure micro-prismatique (4) réfléchissant spéculairement les rayons lumineux et les extrayant du moyen de transmission sensiblement selon une deuxième direction appelée z perpendiculaire à la première direction, les rayons lumineux en sortie du moyen de transmission étant collimatés dans le plan z-x, et
- un second moyen de collimation (6) déviant les rayons incidents pour réaliser la collimation des rayons lumineux de sortie au moins dans un plan y-z, y étant une troisième direction perpendiculaire aux première et seconde directions,
**caractérisé en ce que** ledit second moyen de collimation (6) est constitué par au moins une rangée de lentilles cylindriques (68).

2. Système d'éclairage arrière selon la revendication 1, **caractérisé en ce que** ledit second moyen de collimation (6) est positionné sur la face du moyen de transmission (3) opposée à celle comportant ladite structure micro-prismatique (4),

3. Système d'éclairage arrière selon la revendication 1 ou 2, **caractérisé en ce que** les parties (69) séparant les surfaces d'entrée de deux lentilles adjacentes comportent des surfaces réfléchissantes.

4. Dispositif d'affichage comportant un système d'éclairage arrière (10), un modulateur electro-optique transmissif du type afficheur à cristaux liquides (LCD) et un moyen pour distribuer la lumière angulairement (110), **caractérisé en ce que** le système d'éclairage arrière (10) est réalisé selon l'une quelconque des revendications 1 à 3.

5. Dispositif d'affichage selon la revendication 4, **caractérisé en ce que** le moyen pour distribuer la lumière angulairement (110) est constitué par un réseau de micro-lentilles, un dépoli diffuseur, ou un diffuseur holographique.

6. Dispositif selon l'une quelconque des revendications 4 à 5, **caractérisé en ce qu'**une couche de filtres colorés (117) est positionnée entre l'afficheur (LCD) et l'écran de diffusion (110).

7. Dispositif selon la revendication 6, **caractérisé en ce que** la couche de filtres colorés (117) incorpore une couche matricielle noire appelée "black matrix" (118).

8. Dispositif selon la revendication 7, **caractérisé en ce qu'**une couche matricielle noire appelée "black matrix" supplémentaire (119) est incorporée au niveau des éléments actifs (105) de l'afficheur (LCD).

9. Dispositif selon l'une quelconque des revendications 4 à 8, **caractérisé en ce que** le polariseur du sortie de l'afficheur (LCD) est placé après l'écran de diffusion (110).

10. Dispositif selon l'une quelconque des revendications 4 à 9, **caractérisé en ce qu'**un polariseur supplémentaire (120) orienté parallèlement au polariseur du sortie de l'afficheur (LCD) est placé après l'écran de diffusion (110).

11. Dispositif selon l'une quelconque des revendications 4 à 10, **caractérisé en ce que**, l'afficheur (LCD) comprenant une couche de cristal liquide enfermée entre deux substrats tranparents (101, 102), l'un (102) des substrats transparents de l'afficheur à cristaux liquides (LCD) incorpore une rangée à une ou deux dimensions de micro-lentilles, chaque micro-lentille formant l'image de l'élément pixel associé de l'afficheur (LCD) sur l'écran de diffusion (110).

12. Dispositif selon l'une quelconque des revendications 4 à 11, **caractérisé en ce que**, l'afficheur (LCD) comprenant une couche de cristal liquide enfermée entre deux substrats tranparents (101, 102), l'un(101) des substrats transparents de l'afficheur à cristaux liquides (LCD) incorpore une rangée à une ou deux dimensions de micro-lentilles, chaque micro-lentille collectant la lumière entrant dans un élément d'image ou pixel de l'afficheur (LCD).

## Claims

1. Backlighting system for a transmissive electro-optical modulator operating in direct vision having:
- one or more light-generation means (1) for generating light rays,
- one or more reflectors (2) for sending back said generated light rays In a first direction referred to as x,
- a light-transmission means (3) positioned at the exit of the reflector so as to transport the light rays in the direction x, one of the surfaces of the transmission means parallel to the direction of transport of the light rays having a micro-prismatic structure (4) specularly reflecting the light rays and extracting them from the transmission means substantially in a second direction referred to as z perpendicular to the first direction, the light rays at the exit of the transmission means being collimated in the plane z-x,
and - a second collimation means (6) for carrying out the collimation of the emitted light rays at least in a plane y-z, y being a third direction perpendicular to the first and second directions,
**characterized in that** said second collimation means (6) consists of at least one row of cylindric lenses (68)

2. Backlightning system according to claim 1, **characterized in that** said second collimation means (6) is positioned on the surface of said transmission means (3) opposite to the surface having said micro-prismatic structure (4).

3. Backlighting system according to Claim 1 or 2, **characterised in that** the parts (69) separating the entry surfaces of two adjacent lenses have reflective surfaces.

4. Display device having a backlighting system (10), a transmissive electro-optical modulator of the liquid crystal display (LCD) type and a means for distributing the light angularly (110), **characterised in that** the backlighting system is produced according to anyone of Claims 1 to 3.

5. Display device according to Claim 4, **characterised in that** the means for distributing the light angularly consists of a network of micro-lenses, a diffusing ground glass, or a holographic diffuser.

6. Device according to anyone of Claims 4 to 5, **characterised in that** a layer of coloured filters (117) is positioned between the display (LCD) and the diffusion screen (110).

7. Device according to Claims 6, **characterised in that** the layer of coloured filters (117) incorporates a black matrix (118).

8. Device according to anyone of Claims 7 **characterised in that** an additional black matrix layer (119) is incorporated at the level of the active elements (105) of the display (LCD).

9. Device according to anyone of Claims 4 to 8, **characterised in that** the polariser at the exit of the display (LCD) is placed after the diffusion screen (110).

10. Device according to anyone of Claims 4 to 9, **characterised in that** an additional polariser (120) oriented parallel to the polariser at the exit of the display (LCD) is placed after the diffusion screen (110).

11. Device according to anyone of Claims 4 to 10, **characterised in that**, the display (LCD) comprising a liquid crystal layer between two transparent substrates (101, 102), one (101) of the transparent substrates of the liquid crystal display (LCD) incorporates a one or two dimensional row of micro-lenses, each micro-lens forming the image of the associated pixel element of the display (LCD) on the diffusion screen (110).

12. Device according to anyone of Claims 4 to 11, **characterised in that** the display (LCD) comprising a liquid crystal layer between two transparent substrats (101, 102), one of the transparent substrates of the liquid crystal display (LCD) incorporates a one or two-dimensional row of micro-lenses, each micro-lens collecting the light entering in a pixel element of the display (LCD).

## Patentansprüche

1. Hintergrundbeleuchtungssystem für einen transmissiven elektrooptischen Direktsichtmodulator mit
- einem oder mehreren Mitteln (1) zur Lichterzeugung, um Lichtstrahlen zu erzeugen,
- einem oder mehreren Reflektoren (2), um die erzeugten Lichtstrahlen in eine erste Richtung x zu reflektieren,
- einem Mittel (3) für die Übertragung des Lichts, welches derart am Austritt aus dem Reflektor positioniert ist, dass die Lichtstrahlen in die x-Richtung übertragen werden, wobei eine der Flächen des Übertragungsmittels, welche parallel zu der Richtung der Übertragung der Lichtstrahlen verläuft, eine mikroprismatische Struktur (4) aufweist, die spiegelartig die Lichtstrahlen reflektiert und sie aus dem Übertragungsmittel im Wesentlichen in einer zweiten Richtung z extrahiert, die senkrecht zu der ersten Richtung verläuft, wobei die Lichtstrahlen am Austritt aus dem Übertragungsmittel in der z-x-Ebene kollimiert werden, und
- einem zweiten Kollimiermittel (6), welches die einfallenden Strahlen umlenkt, um die Kollimierung der austretenden Lichtstrahlen mindestens in einer y-z-Ebene zu bewirken, wobei y eine dritte Richtung ist, die senkrecht zu der ersten und zu der zweiten Richtung verläuft,
**dadurch gekennzeichnet, dass** das zweite Kollimiermittel (6) durch mindestens eine Reihe zylindrischer Linsen (68) gebildet ist.

2. Hintergrundbeleuchtungssystem nach Anspruch 1, **dadurch gekennzeichnet, dass** das zweite Kollimiermittel (6) auf der Fläche des Übertragungsmittels (3) positioniert ist, die derjenigen gegenüberliegt, welche die mikroprismatische Struktur (4) aufweist.

3. Hintergrundbeleuchtungssystem nach Anspruch 1 oder 2, **dadurch gekennzeichnet, dass** die Bereiche (69), welche die Eintrittsflächen zweier aneinander grenzender Linsen trennen, reflektierende Oberflächen aufweisen.

4. Anzeigevorrichtung mit einem
Hintergrundbeleuchtungssystem (10), einem transmissiven elektrooptischen Modulator von der Art eines Flüssigkristall-Anzeigers (LCD) und einem Mittel (110), um das Licht winkelig zu verteilen, **dadurch gekennzeichnet, dass** das Hintergrundbeleuchtungssystem (10) nach einem der Ansprüche 1 bis 3 ausgebildet ist.

5. Anzeigevorrichtung nach Anspruch 4, **dadurch gekennzeichnet, dass** das Mittel (110) für die winkelige Lichtverteilung durch ein Gitter aus Mikrolinsen, einen Mattdiffusor oder einen holographischen Diffusor gebildet ist.

6. Vorrichtung nach einem der Ansprüche 4 bis 5, **dadurch gekennzeichnet, dass** eine Schicht farbiger Filter (117) zwischen dem Anzeiger (LCD) und dem Diffusionsschirm (110) angeordnet ist.

7. Vorrichtung nach Anspruch 6, **dadurch gekennzeichnet, dass** die Schicht farbiger Filter (117) eine als "black matrix" bezeichnete schwarze Matrixschicht (118) einbezieht.

8. Vorrichtung nach Anspruch 7, **dadurch gekennzeichnet, dass** eine zusätzliche als "black matrix" bezeichnete schwarze Matrixschicht (119) in die aktiven Elemente (105) des Anzeigers (LCD) einbezogen ist.

9. Vorrichtung nach einem der Ansprüche 4 bis 8, **dadurch gekennzeichnet, dass** der Austrittspolarisator des Anzeigers (LCD) nach dem Diffusionsschirm (110) angeordnet ist.

10. Vorrichtung nach einem der Ansprüche 4 bis 9, **dadurch gekennzeichnet, dass** ein zusätzlicher Polarisator, der parallel zu dem Austrittspolarisator des Anzeigers (LCD) gerichtet ist, nach dem Diffusionsschirm (110) angeordnet ist.

11. Vorrichtung nach einem der Ansprüche 4 bis 10, **dadurch gekennzeichnet, dass**, wenn der Anzeiger (LCD) eine zwischen zwei transparenten Substraten (101, 102) eingeschlossene Flüssigkristallschicht umfasst, eines (102) der transparenten Substrate des Flüssigkristallanzeigers (LCD) eine ein- oder zweidimensionale Reihe von Mikrolinsen einbezieht, wobei jede Mikrolinse das Bild des zugeordneten Pixelelements des Anzeigers (LCD) auf dem Diffusionsschirm (110) bildet.

12. Vorrichtung nach einem der Ansprüche 4 bis 11, **dadurch gekennzeichnet, dass**, wenn der Anzeiger (LCD) eine zwischen zwei transparenten Substraten (101, 102) eingeschlossene Flüssigkristallschicht umfasst, eines (101) der transparenten Substrate des Flüssigkristallanzeigers (LCD) eine ein- oder zweidimensionale Reihe von Mikrolinsen einbezieht, wobei jede Mikrolinse das Licht sammelt, welches in ein Bildelement bzw. Pixel des Anzeigers (LCD) eintritt.
